# FASCICULE DE BREVET EUROPEEN

(11) **EP 1 487 722 B1**
(45) Date de publication et mention de la délivrance du brevet: **01.02.2006**
(21) Numéro de dépôt: 03735783.7
(22) Date de dépôt: 20.03.2003
(51) Int. Cl.: B65G 7/04

(54) **DISPOSITIF POUR LE DEPLACEMENT D UNE CHARGE VOLUMINEUSE**
VORRICHTUNG ZUM BEWEGEN EINER SPERRIGEN LAST
DEVICE FOR DISPLACING A BULKY LOAD

(30) Priorité: 22.03.2002 FR 0203603
(43) Date de publication de la demande: 22.12.2004
(73) Titulaire: SARL Installations Magasins Gerard Roquet ( IMGR), 34360 Saint-Chinian (FR)
(72) Inventeur: ROCQUET, Gérard, F-34360 Saint-Chinian (FR)
(74) Mandataire: Rhein, Alain
(86) Numéro de dépôt international: PCT/FR2003/000886
(87) Numéro de publication internationale: WO 2003/080480

(56) Documents cités:
- DE-B- 1 162 768
- DE-U- 9 407 132
- DE-U- 9 410 089
- DE-U- 9 414 888
- JP-A- 2002 012 001
- US-A- 4 946 294

## Description

La présente invention a pour objet un dispositif permettant de déplacer des charges importantes et volumineuses, telles que notamment des meubles à usage professionnel ou des machines.

Plusieurs documents de l'art antérieur décrivent des dispositifs de déplacement de charges utilisant des systèmes à billes.

Ainsi, le document US 4.946.294 a pour objet un dispositif pour le déplacement d'un objet sur une surface plane, il comporte une platine percée d'une multiplicité de trous dans chacun desquels est disposé un roulement dont les billes font saillie au-dessus et en dessous de ladite platine. Du fait que les billes sont en contact avec d'une part la base de l'objet à déplacer et d'autre part avec la surface plane sur laquelle il faut déplacer ledit objet, les billes roulent à la fois sur ledit objet et sur ladite surface, on obtient ainsi une démultiplication de la vitesse de déplacement, par contre l'usage de ce dispositif est très limité, puisque l'objet à déplacer doit présenter un fond plat permettant le roulage des billes, et le déplacement ne peut être réalisé que sur une courte distance, au maximum deux fois la longueur de la platine.

On connaît également des chemins de roulement constitués de l'assemblage sur un bâti de plaques à billes, les objets à transférer étant déplacés étant un tel dispositif est par exemple décrit dans le document JP 2002 0120001.

On connaît également des dispositifs utilisant des éléments appelés bille porteuse, constitué d'une cage comprenant une enceinte hémisphérique renfermant un grand nombre de petites billes coopérant avec une grande bille dont une partie émerge de ladite cage.

Ainsi, le document DE 88 12 558 et EP 0 473 865 présentent des platines équipées de plusieurs de billes porteuses.

Le document FR 2 763 925 concerne également un dispositif de déplacement de charge comprenant une platine circulaire équipée de trois billes porteuses, et comportant par ailleurs des moyens permettant de stabiliser l'objet à transporter lors du déplacement.

Ces dispositifs équipés de billes porteuses permettent, de manière particulièrement avantageuse, de déménager des charges sans avoir à recourir à une main d'oeuvre importante pour les soulever et les transporter d'un endroit vers un autre. En particulier, il est tout à fait envisageable qu'une personne effectue cette opération seule, lorsque le changement d'emplacement ne suppose qu'un transfert linéaire de la charge sur une distance modérée.

Ainsi, ce type de dispositif constitue, par exemple, une solution tout à fait indiquée pour les supermarchés, dont les méthodes de vente supposent des réorganisations fréquentes des rayons, et de multiples déplacements de gondoles et autres présentoirs à marchandises.

La présente invention concerne un dispositif du type comprenant une platine équipée de billes porteuses, apte à être préalablement glissée sous la charge à déplacer, et permettant de transférer cette dernière par roulement.

Bien que les dispositifs précités soient aujourd'hui d'un usage courant, ils ne donnent pas toujours entière satisfaction, en particulier pour le déplacement d'éléments très volumineux et/ou de masse élevée.

En effet, du fait des dimensions réduites des platines employées et de leur seuil de charge, ce type d'application nécessite l'utilisation d'une pluralité de ces dernières, qu'il faut positionner convenablement sous les éléments à déplacer, de manière que leur masse soit répartie uniformément sur l'ensemble desdites platines.

On comprendra aisément que le positionnement correct des différentes platines est aussi délicat à obtenir qu'à conserver, et qu'il est souvent nécessaire de renouveler les opérations à plusieurs reprises jusqu'à ce que la charge soit bien équilibrée sur les différentes platines.

De plus, les platines ainsi mises en place, peuvent glisser par rapport à la charge qu'elles supportent, au cours du déplacement de cette dernière, et entraîner un déséquilibre, voire un basculement de l'ensemble au cours de la manipulation.

La présente invention a pour but de remédier à ces divers inconvénients, en proposant un dispositif apte à permettre une adaptation rapide et aisée par rapport au volume et à la masse de l'élément à transporter.

A cet effet, la présente invention concerne un dispositif pour le déplacement d'une charge volumineuse, du type comprenant une platine apte à être glissée sous ladite charge, ladite platine comportant des billes porteuses, caractérisé en ce qu'il consiste en un ensemble d'au moins deux platines réunies entre elles par des moyens de liaison qui coopèrent avec des moyens d'accrochage que comportent lesdites platines.

Le fait d'utiliser au moins deux platines réunies entre elles permet d'augmenter considérablement la surface de contact entre le dispositif de déplacement et la charge à transporter, et ainsi d'optimiser la répartition de la masse de cette dernière, de sorte à ce qu'elle soit parfaitement équilibrée au cours de son transfert.

Selon une caractéristique additionnelle du dispositif selon l'invention, les moyens de liaison se présentent sous la forme de croisillons prévus aptes à coopérer avec des éléments complémentaires disposés de manière adéquate sur chacune des platines.

Selon une autre caractéristique additionnelle du dispositif selon l'invention, les croisillons présentent quatre branches dont les extrémités respectives sont prolongées de crampons s'étendant perpendiculairement à l'axe desdites branches, et étant destinés à être engagés dans des cavités complémentaires ménagées à cet effet sur chacune des platines.

Selon une autre caractéristique additionnelle du dispositif selon l'invention, les platines comportent des évidements reliant chacun une cavité au bord de la platine et destiné à loger une partie de la branche dont le crampon et engagé dans ladite cavité.

Par ailleurs, selon une possibilité de réalisation, chacune des platines présente une forme sensiblement triangulaire, et est équipée de trois billes porteuses positionnées respectivement à chacun de ses angles.

Dans ce mode de mise en oeuvre, chacune des platines présente, en outre, à l'un de ses angles, un moyen d'accrochage apte à coopérer avec un moyen d'accrochage d'un croisillon pour permettre l'assemblage de quatre platines.

Selon une caractéristique additionnelle, chacune desdites platines présente sur un bord entre deux angles un moyen d'accrochage apte à coopérer avec les moyens d'accrochage de deux branches voisines d'un croisillon pour permettre l'assemblage bord à bord de deux platines.

Selon une forme de réalisation préférentielle du dispositif selon l'invention, les billes porteuses sont assujetties à une platine en sorte d'émerger d'une face ou de l'autre de ladite platine, afin de permettre une réversibilité de ladite platine.

Selon une autre caractéristique additionnelle du dispositif selon l'invention, les platines présentent des moyens permettant de caler la charge à déplacer.

Selon une autre caractéristique additionnelle du dispositif selon l'invention, les moyens permettant de caler la charge à déplacer consistent en des puits aptes à loger les billes porteuses, et qui font saillie d'une face de la platine, lesdites platines présentent des moyens permettant de stabiliser ladite charge à déplacer sur ledit ensemble d'au moins deux platines.

Enfin, selon une dernière caractéristique du présent dispositif, lesdites platines présentent sur une de leurs faces des protubérances entre lesquelles sont ménagés des creux permettant des caler des parties de la charge à déplacer, telles que, notamment, des pieds.

L'invention sera, à présent, mieux comprise à la lecture de la description qui va suivre, se rapportant à des exemples de réalisation, donnés à titre indicatif et non limitatif.

Les avantages et les caractéristiques du dispositif selon l'invention, ressortiront plus clairement de la description qui suit et qui se rapporte au dessin annexé, lequel en représente un mode de réalisation non limitatif.

Dans le dessin annexé :
La figure 1 représente une vue schématique de dessus d'un dispositif selon l'invention dans une configuration particulière,
La figure 2 représente une vue en plan de dessous d'un élément du même dispositif,
La figure 3 représente une vue de profil de ce même élément,
La figure 4 est une vue schématique en plan de dessus d'un dispositif selon l'invention dans une autre configuration,
La figure 5 est une vue de profil du dispositif selon l'invention tel que représenté sur la figure 1.

La présente invention concerne un dispositif 1 de déplacement de charge du type comprenant une platine 2 apte à être glissée sous la charge, et comprenant des billes porteuses 3.

En fait, de manière particulièrement avantageuse, la présente invention vise un dispositif 1 comprenant des moyens permettant de l'adapter en fonction de la masse et/ou du volume de l'élément à déplacer, de sorte à rendre cette opération plus facile, plus rapide et plus efficace.

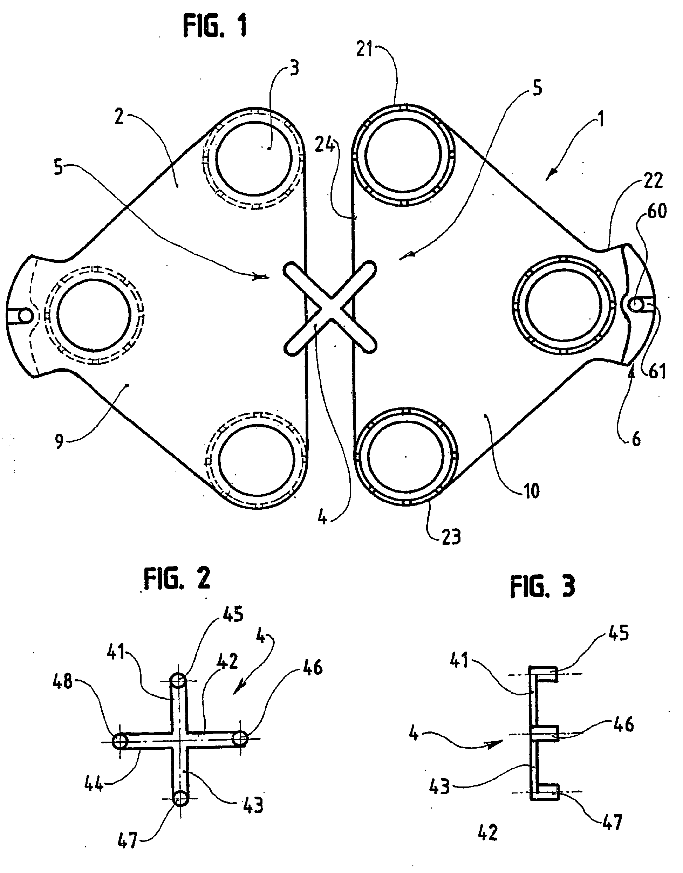

A cet effet, le dispositif 1 consiste, comme cela est représenté sur la figure 1, en une association de deux platines 2, réunies solidement par des moyens de liaison amovibles.

Comme cela est visible plus précisément sur les figures 2 et 3, un tel moyen de liaison se présente sous la forme d'un croisillon 4 comprenant quatre branches 41, 42, 43, 44 de l'extrémité libre de chacune desquelles fait saillie perpendiculairement un crampon, respectivement 45, 46, 47 et 48.

Selon la présente invention, les croisillons 4 sont, par exemple, réalisés en métal, ou en tout autre matériau apte à supporter des contraintes importantes sans se briser.

Les croisillons 4 permettent l'assemblage des platines 2 entre elles, grâce aux crampons 45, 46, 47 et 48, et à des moyens d'accrochage complémentaires ménagés, à cet effet, sur les platines 2.

Ces dernières sont, de préférence, réalisées en métal, et présentent une configuration sensiblement triangulaire, d'épaisseur comprise entre 3 et 5 cm, et dont chaque angle 21, 22, 23 est arrondi, et est équipé d'une bille porteuse 3.

En outre, conformément à la présente invention, chaque platine 2 est munie d'un moyen d'accrochage 5 des croisillons 4, situé sur un côté 24 entre les deux angles 21 et 23.

Ce moyen d'accrochage est destiné à coopérer avec les crampons de deux branches voisines, pour permettre la réunion de deux platines 2 disposées côtés 24 en regard.

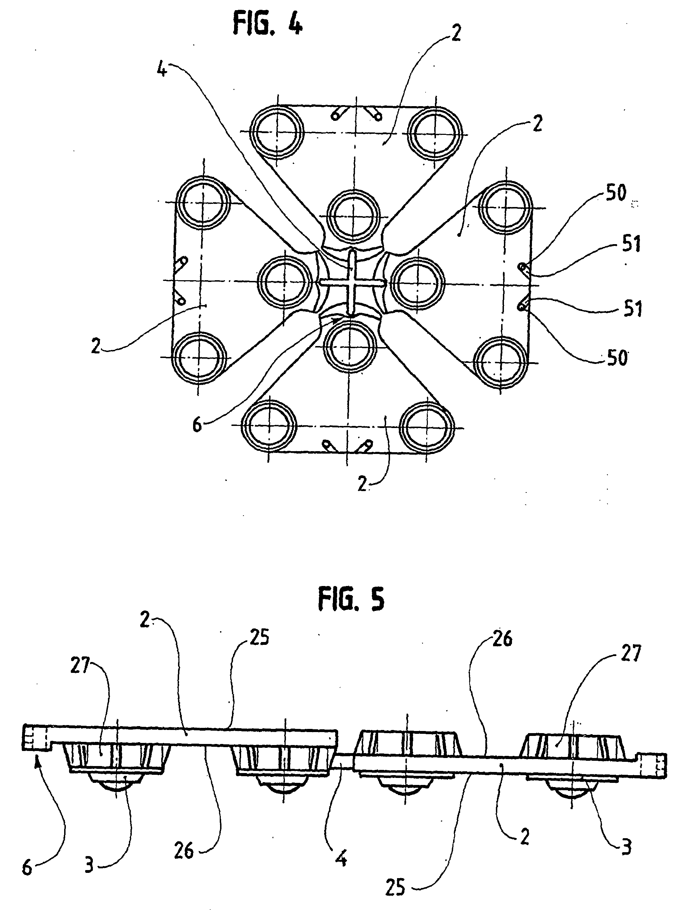

Le moyen d'accrochage 5, tel que cela est visible sur la figure 4, se présente sous la forme de deux cavités cylindrique 50 de forme et de dimensions permettant à chacune de loger étroitement un crampon 45, 46, 47 ou 48.

De préférence, ces deux cavités 50 sont positionnées en sorte de permettre d'y introduire les deux crampons de deux branches voisines, lesquelles peuvent prendre place chacune dans l'une des deux gorges 51 s'étendant depuis une cavité 50 jusqu'au bord du côté 24.

Ainsi, le dispositif 1 selon la présente invention comprend deux platines 2 assemblées fermement bord à bord, en formant un élément sensiblement quadrilatère, tel que schématisé, vu de dessus, à la figure 1.

Ceci permet avantageusement d'augmenter la taille de la surface susceptible de se trouver en contact avec la charge à déplacer, et il est alors bien plus aisé de positionner le dispositif 1 correctement sous la charge, de manière qu'elle soit parfaitement stabilisée, quelles que soient ses dimensions et sa masse.

D'autre part, afin d'élargir encore les possibilités d'utilisation du dispositif 1, la présente invention prévoit également des moyens permettant l'association de quatre platines 2 entre elles.

A cet effet, chaque platine 2 présente au niveau de son angle 22, opposé au côté 24, un moyen 6 d'accrochage d'un croisillon 4, qui se présente sous la forme d'une cavité 60 identique une cavité 50, d'axe perpendiculaire au plan de la platine 2, tandis qu'une gorge 61 s'étend entre la cavité 60 et le bord de la platine 2.

Ainsi, quatre platines 2 peuvent être solidarisées angle contre angle, grâce aux croisillons 4 dont chaque branche 41, 42, 43, 44 coopère avec un moyen d'accrochage 6.

Selon une autre forme de réalisation envisageable, le présent dispositif 1 comprend des platines 2 auxquelles les billes porteuses 3 peuvent être assujetties sur une face ou sur l'autre, permettant ainsi une réversibilité. Ainsi, en référence à la figure 5, on peut voir deux platines 2 associées de manière que l'une soit inversée par rapport à l'autre. A cet effet, les moyens d'accrochage 5 et 6 sont bien entendu également prévus réversibles pour permettre une telle association avec des croisillons 4.

La réversibilité des platines permet d'utiliser l'une ou l'autre face d'une platine 2 comme surface de contact avec la charge à déplacer. En sorte qu'il est possible de prévoir une face lisse et une face avec des reliefs. En l'occurrence les platines 2 comportent une face lisse 25 et une face 26 de laquelle font saillie des puits 27 destiné à loger les billes porteuses 3.

Il est ainsi possible de caler entre les puits 27 sur la face 6 des éléments de la charge à déplacer.

Tel qu'il ressort clairement de ce qui précède, la présente invention permet de proposer des dispositifs de déplacement de charge aptes à être adaptés aisément au volume et à la masse de cette dernière.

En effet, grâce aux différents moyens mis en oeuvre, il est tout à fait envisageable d'associer non seulement deux ou quatre platines 2 entre elles, mais également davantage, en choisissant leur nombre en fonction des caractéristiques de l'élément à déplacer et en utilisant plusieurs croisillons 4.

Il est également tout à fait possible d'utiliser plusieurs dispositifs 1 selon l'invention, placés de manière adéquate sous les charges ou éléments à transporter.

## Revendications

1. Dispositif pour le déplacement d'une charge volumineuse, du type comprenant une platine (2) apte à être glissée sous ladite charge, ladite platine (2) comportant des billes porteuses (3), **caractérisé en ce qu'**il consiste en un ensemble d'au moins deux platines (2) réunies entre elles par des moyens de liaison (4) qui coopèrent avec des moyens d'accrochage (5, 6) que comportent lesdites platines (2).

2. Dispositif selon la revendication 1, **caractérisé en ce que** les moyens de liaison se présentent sous la forme de croisillons (4) prévus aptes à coopérer avec des éléments complémentaires (5 ; 6) disposés de manière adéquate sur chacune des platines (2) .

3. Dispositif selon la revendication 2, **caractérisé en ce que** les croisillons (4) présentent quatre branches (41, 42, 43, 44) dont les extrémités respectives sont prolongées de crampons (45, 46, 47, 48) s'étendant perpendiculairement à l'axe desdites branches (41, 42, 43, 44), et étant destinés à être engagés dans des cavités (50) complémentaires ménagées à cet effet sur chacune des platines (2).

4. Dispositif selon la revendication 3, **caractérisé en ce que** les platines (2) comportent des évidements (51 ; 61) reliant chacun une cavité (50) au bord de la platine (2) et destiné à loger une partie de la branche (41, 42, 43, 44) dont le crampon (45, 46, 47, 48) et engagé dans ladite cavité (50).

5. Dispositif selon l'une quelconque des revendications précédentes, **caractérisé en ce que** chacune des platines (2) présente une forme sensiblement triangulaire, et est équipée de trois billes porteuses (3) positionnées à chacun de ses angles (21, 22, 23).

6. Dispositif selon la revendication 5, **caractérisé en ce que** chacune desdites platines (2) présente à un angle (22) un moyen d'accrochage (6) apte à coopérer avec un croisillon (4) pour permettre l'assemblage de quatre platines (2).

7. Dispositif selon l'une quelconque des revendications 5 ou 6, **caractérisé en ce que** chacune des platines (2) présente sur un bord (24) entre deux angles (21, 23) un moyen d'accrochage apte à coopérer avec les moyens d'accrochage de deux branches voisines d'un croisillon (4) pour permettre l'assemblage bord à bord de deux platines (2).

8. Dispositif selon l'une quelconque des revendications précédentes, **caractérisé en ce que** les billes porteuses (3) sont assujetties à une platine (2) en sorte d'émerger d'une face ou de l'autre (25, 26) de ladite platine (2), afin de permettre une réversibilité de ladite platine (2).

9. Dispositif selon l'une quelconque des revendications précédentes, **caractérisé en ce que** les platines (2) présentent des moyens (27) permettant de caler la charge à déplacer.

10. Dispositif selon la revendication 9, **caractérisé en ce que** les moyens permettant de caler la charge à déplacer consistent en des puits (27) aptes à loger les billes porteuses (3), et qui font saillie d'une face (26) de la platine (2).

## Patentansprüche

1. Vorrichtung zum Bewegen einer sperrigen Last, der Art umfassend eine Platte (2), geeignet, unter der besagten Last gerutscht zu werden, wobei die besagte Platte (2) Trägerkugeln (3) umfaßt, **dadurch gekennzeichnet, daß** sie aus einer Gesamtheit von wenigstens zwei Platten (2) besteht, die miteinander durch Verbindungsmittel (4) verbunden sind, die mit Kupplungsmitteln (5, 6) zusammenwirken, die die besagten Platten (2) umfassen.

2. Vorrichtung nach Anspruch 1, **dadurch gekennzeichnet, daß** die Verbindungsmittel als Drehkreuzen (4) ausgestaltet sind, geeignet vorgesehen, um mit ergänzenden Elementen (5 ; 6) zusammenzuwirken, die auf angemessene Art und Weise auf jede der Platten (2) angeordnet sind.

3. Vorrichtung nach Anspruch 2, **dadurch gekennzeichnet, daß** die Drehkreuze (4) vier Schenkel (41, 42, 43, 44) aufweisen, deren entsprechende Enden durch Krampen (45, 46, 47, 46) verlängert sind, die sich senkrecht zu der Achse der besagten Schenkel (41, 42, 43, 44) erstrecken, und vorgesehen seien, um in ergänzende Hohlräume (50) eingeführt zu werden, die zu diesem Zweck auf jeder der Platten (2) vorgesehen sind.

4. Vorrichtung nach Anspruch 3, **dadurch gekennzeichnet, daß** die Platten (2) Ausnehmungen (51 ; 61) umfassen, die jeweils einen Hohlraum (50) mit dem Rand der Platte (2) verbinden und vorgesehen sind, um einen Teil des Schenkels (41, 42, 43, 44) aufzunehmen, dessen Krampen (45, 46, 47, 48) in dem besagten Hohlraum (50) eingeführt ist.

5. Vorrichtung nach irgendeinem der vorgehenden Ansprüche, **dadurch gekennzeichnet, daß** jede der Platten (2) eine im wesentlichen dreieckige Form aufweist und mit drei Trägerkugeln (3) ausgestattet ist, die an jeder ihrer Ecken (21, 22, 23) positioniert sind.

6. Vorrichtung nach Anspruch 5, **dadurch gekennzeichnet, daß** jede der besagten Platten (2) an einer Ecke (22) ein Kupplungsmittel (6) aufweist, das geeignet ist, um mit einem Drehkreuz (4) zusammenzuwirken, um die Verbindung der vier Platten (2) zu erlauben.

7. Vorrichtung nach irgendeinem der Ansprüche 5 oder 6, **dadurch gekennzeichnet, daß** jede der Platten (2) an einem Rand (24) zwischen zwei Ecken (21, 23) ein Kupplungsmittel aufweist, das geeignet ist, um mit den Kupplungsmitteln von zwei, einem Drehkreuz (4) benachbarten Schenkel zusammenzuwirken, um die Verbindung von zwei Platten (2) dicht nebeneinander zu erlauben.

8. Vorrichtung nach irgendeinem der vorgehenden Ansprüche, **dadurch gekennzeichnet, daß** die Trägerkugeln (3) an einer Platte (2) befestigt sind, derart, daß sie vor der einen oder vor der anderen Seite (25, 26) der besagten Platte (2) hervorzuragen, um eine Umkehrbarkeit der besagten Platte (2) zu erlauben.

9. Vorrichtung nach irgendeinem der vorgehenden Ansprüche, **dadurch gekennzeichnet, daß** die Platten (2) Mittel (27) aufweisen, die es erlauben, die zu bewegende Last festzuklemmen.

10. Vorrichtung nach Anspruch 9, **dadurch gekennzeichnet, daß** die Mittel, die es erlauben, die zu bewegende Last festzuklemmen, aus Bohrungen (27) bestehen, die geeignet sind, die Trägerkugeln (3) aufzunehmen, und vor einer Seite (26) der Platte (2) hervorragen.

## Claims

1. Device for displacing a bulky load, of the type comprising a plate (2) capable of being slit under said load, said plate (2) including bearing balls (3), **characterised in that** it is comprised of an aggregate of at least two plates (2) united to each other by connecting means (4) that co-operate with coupling means (5, 6) said plates (2) include.

2. Device according to claim 1, **characterised in that** the connecting means are in the form of cross-pieces (4) designed capable of co-operating with complementary members (5 ; 6) adequately arranged on each one of the plates (2).

3. Device according to claim 2, **characterised in that** the cross-pieces (4) have four legs (41, 42, 43, 44) the respective ends of which are extended by cramps (45, 46, 47, 46) extending perpendicularly to the axis of said legs (41, 42, 43, 44), and being aimed at being inserted into complementary cavities (50) provided for this purpose on each of the plates (2).

4. Device according to claim 3, **characterised in that** the plates (2) include recesses (51 ; 61) each connecting a cavity (50) with the edge of the plate (2) and aimed at accommodating a portion of the leg (41, 42, 43, 44) the cramp (45, 46, 47, 48) of which is inserted into said cavity (50).

5. Device according to any of the preceding claims, **characterised in that** each one of the plates (2) has a substantially triangular shape and is provided with three bearing balls (3) positioned at each of its corners (21, 22, 23).

6. Device according to claim 5, **characterised in that** each one of said plates (2) has, at a corner (22), coupling means (6) capable of co-operating with a cross-piece (4), in order to allow assembling the four plates (2).

7. Device according to any of claims 5 or 6, **characterised in that** each one of the plates (2) has, at an edge (24) between two corners (21, 23), coupling means capable of co-operating with the coupling means of two legs adjacent to a cross-piece (4), in order to allow assembling two plates (2) edge to edge.

8. Device according to any of the preceding claims, **characterised in that** the bearing balls (3) are fixed to a plate (2), so as to emerge from either face (25, 26) of said plate (2), in order to allow a reversibility of said plate (2).

9. Device according to any of the preceding claims, **characterised in that** the plates (2) have means (27) allowing to immobilise the load to be displaced.

10. Device according to claim 9, **characterised in that** the means allowing to immobilise the load to be displaced consist of wells (27) capable of accommodating the bearing balls (3), and protruding with respect to a face (26) of the plate (2).
